# EUROPÄISCHE PATENTSCHRIFT

(11) **EP 2 453 115 B1**
(45) Veröffentlichungstag und Bekanntmachung des Hinweises auf die Patenterteilung: **10.07.2013**
(21) Anmeldenummer: 11007663.5
(22) Anmeldetag: 21.09.2011
(51) Int. Cl.: F01N 3/20, B01D 35/027, F02M 37/10, F02M 37/22, B60K 15/077

(54) **Flüssigkeitsbehälter, insbesondere für eine wässrige Harnstofflösung**
Liquid reservoir, in particular for an aqueous urea solution
Réservoir de liquide, en particulier pour une solution d'urée aqueuse

(30) Priorität: 12.11.2010 DE 102010051072
(43) Veröffentlichungstag der Anmeldung: 16.05.2012
(60) Teilanmeldung: 12007406.7
(73) Patentinhaber: Kautex Textron GmbH & Co. KG, 53229 Bonn (DE)
(72) Erfinder: Treudt, Volker, 51570 Windeck (DE)
(74) Vertreter: polypatent

(56) Entgegenhaltungen:
- EP-A1- 0 798 457
- EP-A2- 1 510 392
- WO-A1-99/14485
- WO-A2-2010/119116
- DE-A1- 19 644 464
- US-A- 4 546 750

## Beschreibung

Die Erfindung betrifft Flüssigkeitsbehälter, insbesondere für eine wässrige Harnstofflösung.

In der Fahrzeugtechnik wird vermehrt das SCR-Verfahren (Selectiv Catalytic Reduction) angewendet, um bei Dieselfahrzeugen die Stickoxydemission zu senken. Das für die SCR-Reaktion benötigte Ammoniak wird nicht direkt verwendet, sondern in Form einer 32,5%igen wässrigen Harnstofflösung gemäß DIN 700 70. Diese wässrige Harnstofflösung wird von dem SCR-Katalysator in dem Abgasstrang, zum Beispiel mittels einer Dosierpumpe oder eines Injektors, eingespritzt. Aus der Harnstoff-Wasser-Lösung entstehen durch eine Hydrolysereaktion Ammoniak und CO₂. Das so erzeuge Ammoniak kann mit den Stickoxyden im Abgas reagieren und so die Stickoxydemission senken. Die Menge des eingespritzten Harnstoffs ist von der Stickoxydemission des Motors und somit von der momentanen Drehzahl und dem Drehmoment des Motors abhängig. Der Wirkungsgrad des SCR-Katalysators ist dabei davon abhängig, dass die wässrige Harnstofflösung im richtigen Verhältnis zur Stickoxydemission des Motors eingespritzt wird. Bei einer zu geringen Einspritzung von wässriger Harnstofflösung sinkt der Wirkungsgrad der Stickoxydminderung. Wird zuviel Harnstoff eingespritzt, so kann das daraus gebildete Ammoniak nicht mit Stickoxyden reagieren und in die Umgebung gelangen. Es ist somit eine möglichst genaue Förderung von wässriger Harnstofflösung von dem Flüssigkeitsbehälter für die wässrige Harnstofflösung zu dem SCR-Katalysator notwendig, vorzugsweise im Bereich von Millilitern.

Aus der EP 1 510 392 A2 ist ein Kraftstoffbehälter für ein Kraftfahrzeug mit einer Kraftstofffördereinheit zum Fördern von Kraftstoff bekannt. Die Kraftstofffördereinheit umfasst ein am Böden des Kraftstoffbehälters angeordnetes Filterelement, wobei das Filterelement ein beutelförmiges Filtergewebe mit vorgesehener Maschenweite aufweist. Das beutelförmige Filtergewebe ist in mehreren, in der vorgesehenen Einbaulage des Kraftstoffbehälters tief gelegenen Bereichen des Bodens angeordnet, wobei die Maschenweite derart bemessen ist, dass das benetzte Filtergewebe durchlässig für Kraftstoffe und undurchlässig für Luft ist. Gemäß einer bevorzugten Ausführungsform gemäß der EP 1 510 392 A2 erstreckt sich das Filtergewebe im Wesentlichen über den gesamten Bereich des Bodens des Kraftstoffbehälters. In einer alternativen Ausführungsform sind mehrere einzelne Filtergewebe in den vorgesehenen Bereichen des Bodens des Kraftstoffbehälters verteilt angeordnet. In dem sich über den gesamten Bereich des Bodens des Kraftstoffbehälters erstreckenden Filtergewebes und den Flüssigkeitsleitungen zu der Kraftstoffpumpe befindet sich zu Beginn der Förderung jedoch Luft, die vor einer Förderung von Kraftstoff zuerst abgeführt werden muss. Bei mehreren Filtergeweben, die über den Boden des Kraftstoffbehälters verteilt angeordnet sind, besteht das Problem, dass sämtliche Flüssigkeitsleitungen gleichmäßig entlüftet werden müssen, um nachfolgend eine gleichmäßige Förderung von Kraftstoff zu gewährleisten.

Das Dokument DE 196 19 992 A1 offenbart ein Kraftstoff-Fördermodul mit einer Kraftstoffpumpe, einem Kraftstoff-Grob- und einem Kraftstoff-Feinfilter, wobei die Kraftstoffpumpe mit dem vorgeschalteten Kraftstoff-Grobfilter von einem auf dem Boden eines Kraftstofftanks angeordneten Speichertopf umgeben ist. Die Wandung des Speichertopfs ist zumindest bereichsweise doppelwandig ausgebildet. In dem vollständig umschlossenen Zwischenraum der Wandung ist der Kraftstoff-Feinfilter angeordnet. Dabei hat der Zwischenraum zum einen im Feinfiltereingangsbereich einen mit dem Druckanschluss der Kraftstoffpumpe verbundenen Zuflussanschluss und zum anderen weist er im Feinfilterausgangsbereich einen Abflussanschluss auf.

Aus der WO 2010/119116 A2 ist ein System zur Speicherung und zum Einspritzen einer Additivlösung in den Abgasstrang einer Brennkraftmaschine bekannt, wobei das System wenigstens einen Tank zur Speicherung des Additivs, eine Pumpe mit einem Einlass und einem Auslass umfasst, die in einem Einspritzmodus eine direkte Zufuhr des Additivs und in einem Abzugsmodus einen Rückfluss an Additiv zwischen wenigstens zwei Ansaugstellen und einem Injektor ermöglicht, wobei eine Ansaugstelle mit dem Pumpeneinlass verbunden ist und nur dann aktiv ist, wenn die Pumpe im Einspritzmodus aktiv ist und die zweite Ansaugstelle mit dem Pumpenauslass verbunden ist und nur dann aktiv ist, wenn die Pumpe im Rückzugsmodus betrieben wird.

Weiterer Stand der Technik ist aus den Dokumenten DE 196 44 464 A1, WO 99/14485 A, EP 0 798 457 A1 und US 4,546,750 B bekannt.

Der Erfindung liegt daher die Aufgabe zugrunde, die Förderung einer Flüssigkeit aus einem Flüssigkeitsbehälter zu einem nachfolgenden Verbraucher, beispielsweise einem SCR-Katalysator, hinsichtlich der Genauigkeit der geförderten Flüssigkeitsmenge zu verbessern.

Gelöst wird die Aufgabe durch einen Flüssigkeitsbehälter, insbesondere für eine wässrige Harnstofflösung, umfassend einen in Einbaulage am Boden des Flüssigkeitsbehälters angeordneten Zwischenspeicher, eine Flüssigkeitsfördereinheit, wenigstens ein, vorzugsweise mehrere, in Einbaulage am Boden außerhalb des Zwischenspeichers angeordnete erste Filterelemente, die jeweils über eine Flüssigkeitsleitung mit der Flüssigkeitsfördereinheit verbunden sind, wobei die ersten Filterelemente so ausgebildet sind, dass das Filtergewebe der ersten Filterelemente durchlässig für die im Flüssigkeitsbehälter befindliche Flüssigkeit und undurchlässig für Luft ist, wobei zwischen dem Inneren des Zwischenspeichers und der Flüssigkeitsfördereinheit ein zweites Filterelement angeordnet ist, welches so ausgebildet ist, dass das Filtergewebe des zweiten Filterelements durchlässig für die im Flüssigkeitsbehälter befindliche Flüssigkeit und undurchlässig für Luft ist, wobei der Durchbrechdruck des zweiten Filterelements, bei welchem durch das Filterelement Luft gefördert wird, größer ist als der Durchbrechdruck der ersten Filterelemente, weiterhin umfassend ein erstes Ventil zwischen der Flüssigkeitsfördereinheit und den ersten Filterelementen, wobei der Öffnungsdruck des ersten Ventils kleiner ist als der Durchbrechdruck des zweiten Filterelements.

Der Öffnungsdruck eines Ventils im Sinne der Erfindung ist der Druck, bei welchem das Ventil von dem geschlossen Zustand in den geöffneten Zustand wechselt.

Der Durchbrechdruck eines Filterelements im Sinne der Erfindung ist der Druck, bei welchem durch das Filterelement Luft gefördert wird.

Der Öffnungsdruck des ersten Ventils kann von dem Durchbrechdruck der ersten Filterelemente beeinflusst werden, da diese in Strömungsrichtung in Reihe geschaltet sind. Dass der Öffnungsdruck des ersten Ventils kleiner ist als der Durchbrechdruck des zweiten Filterelements ist so zu verstehen, dass die Reihenschaltung aus erstem Filterelement und erstem Ventil insgesamt einen Öffnungsdruck aufweist, der kleiner ist als der Durchbrechdruck des zweiten Filterelements.

Durch das erste Ventil wird sichergestellt, dass zuerst die Flüssigkeit aus dem Zwischenspeicher über die Flüssigkeitsfördereinheit zu dem Verbraucher gefördert wird. Ist der Zwischenspeicher vollkommen entleert, sperrt das zweite Filterelement innerhalb des Zwischenspeichers bis zum seinem Durchbrechdruck, bevor Luft über das zweite Filterelement angesaugt wird. Vor Erreichen des Durchbrechdrucks des zweiten Filterelements öffnet sich das erste Ventil und nachfolgend wird Flüssigkeit über die ersten Filterelemente gefördert, wobei die Lage der ersten Filterelemente am Boden des Flüssigkeitsbehälters für eine nahezu vollkommene Restentleerung des Flüssigkeitsbehälters sorgen. Der erfindungsgemäße Flüssigkeitsbehälter hat den Vorteil, dass zuerst die Flüssigkeit aus dem Zwischenspeicher abgefördert wird, wobei die Flüssigkeitsleitungen sehr kurz sind.

Vorzugsweise ist die Flüssigkeitsfördereinheit innerhalb des Zwischenspeichers angeordnet.

Nach einer Variante der Erfindung umfasst das zweite Filterelement wenigstens zwei in Förderrichtung hintereinander angeordnete Filtergewebe, wodurch sich der Durchbrechdruck des zweiten Filterelements erhöht. Durch die Anzahl der hintereinander angeordneten Filtergewebe innerhalb des zweiten Filterelements lässt sich der Durchbrechdruck des zweiten Filterelements auf einfache Art und Weise anpassen. Da der Durchbrechdruck von der Maschenweite des Filtergewebes des zweiten Filterelements abhängt und Filtergewebe nur mit einer Maschenweite in einem bestimmten vorgegebenen Bereich hergestellt werden können, ist eine kaskadenartige Anordnung von Filterelementen eine Möglichkeit den Durchbrechdruck zu erhöhen.

Nach einer bevorzugten Variante der Erfindung entsprechen die wenigstens zwei Filtergewebe des zweiten Filterelements dem Filtergewebe des ersten Filterelements. Somit wird innerhalb des erfindungsgemäßen Flüssigkeitsbehälters nur eine einzige Art von Filtergewebe verwendet, wodurch sich die Herstellungskosten reduzieren lassen, da das Filtergewebe in einer größeren Stückzahl hergestellt bzw. eingekauft werden kann.

Nach einer weiteren Variante der Erfindung sind die ersten Filterelemente jeweils über eine Flüssigkeitsleitung mit einem Sammelpunkt verbunden und der Sammelpunkt ist über eine Flüssigkeitssammelleitung mit der Flüssigkeitsfördereinheit verbunden. Durch die Flüssigkeitssammelleitung wird die Luft innerhalb des Leitungssystems zwischen den ersten Filterelementen und der Flüssigkeitsfördereinheit reduziert, wodurch sich die Fördergenauigkeit von Flüssigkeit aus dem erfindungsgemäßen Flüssigkeitsbehälter zu einem nachfolgenden Verbraucher deutlich erhöht.

Nach einer bevorzugten Variante der Erfindung ist der Sammelpunkt der in Einbaulage höchste Punkt in der Flüssigkeitsverbindung zwischen den ersten Filterelementen und der Flüssigkeitsfördereinheit. Durch die Kombination von Sammelpunkt und der Anordnung des Sammelpunkts am in Einbaulage höchsten Punkt in der Flüssigkeitsverbindung zwischen den ersten Filterelementen und der Flüssigkeitsfördereinheit wird gewährleistet, dass, sobald Flüssigkeit von einem ersten Filterelement über die Flüssigkeitsfördereinheit gefördert wird, kein Druckverlust in den Flüssigkeitsleitungen zwischen dem Sammelpunkt und den anderen ersten Filterelementen entsteht, wodurch sich die entsprechende Leitung zwischen erstem Filterelement und Sammelpunkt wieder mit Luft füllen könnte. Zweckmäßigerweise ist die Flüssigkeitsfördereinheit in Einbaulage unterhalb des Sammelpunkts angeordnet.

Nach einer zweckmäßigen Variante der Erfindung ist das erste Ventil in der Flüssigkeitssammelleitung angeordnet. Somit muss nicht für jedes erste Filterelement ein separates erstes Ventil bereitgestellt werden, sondern ein einziges erstes Ventil für alle ersten Filterelemente.

Gemäß einer weiteren Variante der Erfindung umfasst der Zwischenspeicher ein Heizelement, um die im Zwischenspeicher befindliche Flüssigkeit abzuschmelzen bzw. zu erhitzen. Zusätzlich oder alternativ kann der Zwischenspeicher als Schwalltopf ausgebildet sein. Das Heizelement gewährleistet, dass zu jedem Zeitpunkt ausreichend Flüssigkeit zur Förderung zur Verfügung steht. Insbesondere bei wässriger Harnstofflösung ist das Heizelement vorteilhaft, da der Gefrierpunkt von wässriger Harnstofflösung bei ungefähr-11°C liegt und somit im Einsatzbereich von Kraftfahrzeugen. Der Schwalltopf bietet den Vorteil, dass ein Schwappen der Flüssigkeit innerhalb des Flüssigkeitsbehälters zumindest teilweise unterbunden wird, wodurch eine bessere Versorgung der Flüssigkeitsfördereinrichtung mit Flüssigkeit gewährleistet ist.

In einer weiteren Variante umfasst der erfindungsgemäße Flüssigkeitsbehälter weiterhin einen außerhalb des Flüssigkeitsbehälters angeordneten zweiten Flüssigkeitsbehälter mit wenigstens einem in Einbaulage am Boden angeordneten dritten Filterelement, wobei der zweite Flüssigkeitsbehälter über das wenigstens eine dritte Filterelement und eine Flüssigkeitsverbindungsleitung mit der Flüssigkeitsfördereinheit verbunden ist. Eine derartige Ausgestaltung dient zur Anpassung des erfindungsgemäßen Flüssigkeitsbehälters an die Raumverhältnisse, in welchem der Flüssigkeitsbehälter eingebaut werden soll. Beispielsweise sind die Raumverhältnisse in einem Kraftfahrzeug beschränkt, da möglichst viel von dem vorhandenen Platz für den Innenraum zur Verfügung gestellt werden soll. Somit kann es vorteilhaft sein, den Flüssigkeitsbehälter mehrteilig auszubilden und die einzelnen Flüssigkeitsbehälter an verschiedenen Orten des Kraftfahrzeuges zu platzieren. Ein weiterer Vorteil einer derartigen Ausgestaltung ist, dass die Flüssigkeitsverbindungsleitung zwischen dem erstem Flüssigkeitsbehälter und dem zweiten Flüssigkeitsbehälter keine Flüssigkeitsfördereinheit benötigt, unabhängig von der Lage des zweiten Flüssigkeitsbehälters. So kann der zweite Flüssigkeitsbehälter beispielsweise in Einbaulage unterhalb oder oberhalb des ersten Flüssigkeitsbehälters angeordnet werden, ohne das eine zusätzlich Flüssigkeitsfördereinheit benötigt wird.

Gemäß einer bevorzugten Variante der Erfindung umfasst der Flüssigkeitsbehälter ein zweites Ventil zwischen dem zweiten Filterelement und der Flüssigkeitsfördereinheit und ein drittes Ventil zwischen dem dritten Filterelement und der Flüssigkeitsfördereinheit, wobei der Öffnungsdruck des zweiten Ventils kleiner ist als der Öffnungsdruck des ersten Ventils und der Öffnungsdruck des dritten Ventils kleiner ist als der Öffnungsdruck des zweiten Ventils. Durch eine derartige Ausgestaltung wird gewährleistet, dass zuerst die Flüssigkeit aus dem zweiten Flüssigkeitsbehälter gefördert wird, nachfolgend aus dem Zwischenspeicher des ersten Flüssigkeitsbehälters und anschließend über die ersten Filterelemente die im ersten Flüssigkeitsbehälter befindliche Restflüssigkeit.

Gemäß einer besonders bevorzugten Variante umfasst der Flüssigkeitsbehälter ein viertes Ventil zwischen der Flüssigkeitsfördereinheit und dem Innenraum des Flüssigkeitsbehälter um einen Rückfluss von Flüssigkeit von der Flüssigkeitsfördereinheit in den Flüssigkeitsbehälter zu ermöglich, vorzugsweise in den Flüssigkeitsbehälter welcher ein Heizelement aufweist. Nach einer zweckmäßigen Variante ist das vierte Ventil zwischen der Flüssigkeitsfördereinheit und dem Zwischenspeicher angeordnet. Somit wird beim Rückspülen der Leitung zwischen Flüssigkeitsfördereinheit und Verbraucher gewährleistet, dass die Flüssigkeit in den bereits aufgeheizten Flüssigkeitsbehälter zurückgeführt wird, wodurch ein erneutes Einfrieren der Flüssigkeit verhindert wird. Zweckmäßigerweise ist das vierte Ventil als Einwegeventil ausgebildet, beispielsweise als Rückschlagventil, um eine Förderung von Flüssigkeit aus dem Flüssigkeitsbehälter zu der Flüssigkeitsfördereinheit zu verhindern.

Gemäß einer zweckmäßigen Variante der Erfindung umfasst der zweite Flüssigkeitsbehälter einen zweiten Sammelpunkt, vorzugsweise ist der zweite Sammelpunkt der in Einbaulage höchste Punkt der Flüssigkeitsleitung innerhalb des zweiten Flüssigkeitsbehälters.

Gemäß einer weiteren Variante der Erfindung ist das zweite Filterelement in Einbaulage am Boden des Zwischenspeichers angeordnet. Somit wird eine nahezu vollkommene Entleerung des Zwischenspeichers gewährleistet, bevor Flüssigkeit über die ersten Filterelemente gefördert wird.

Nachfolgend wird die Erfindung anhand einiger in den Figuren dargestellten Ausführungsbeispielen näher erläutert. Es zeigen:
- Figur 1:: eine Schnittansicht einer ersten Ausführungsform gemäß der Erfindung,
- Figur 2:: eine Schnittansicht einer zweiten Ausführungsform gemäß der Erfindung,
- Figur 3:: eine Schnittansicht einer dritten Ausführungsform gemäß der Erfindung, und
- Figur 4:: eine Schnittansicht einer weiteren nicht erfindungsgemässen Flüssigkeitsbehälter.

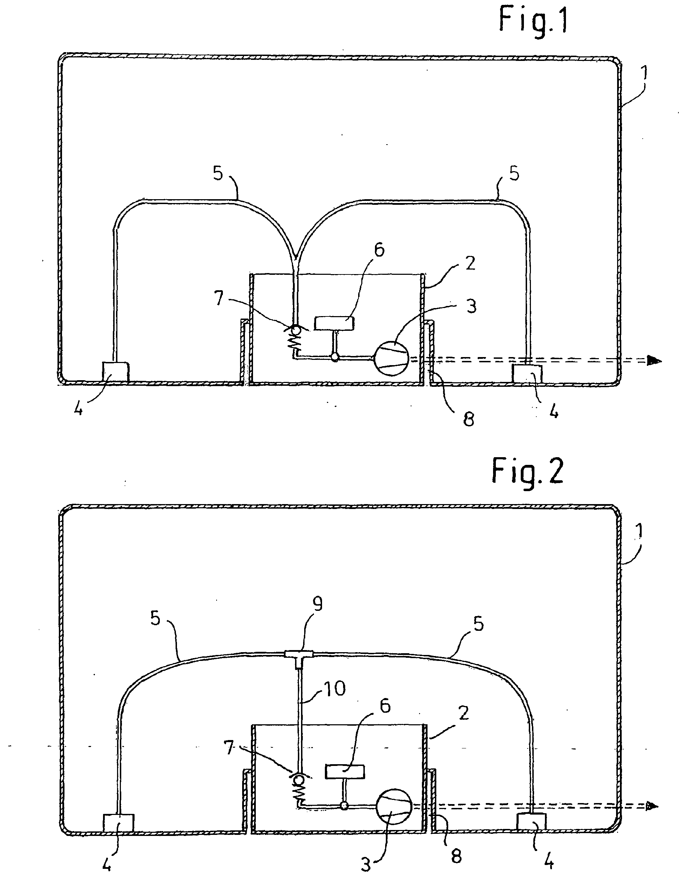

Figur 1 zeigt eine Schnittansicht eines erfindungsgemäßen Flüssigkeitsbehälters 1, insbesondere für eine wässrige Harnstofflösung. Der Flüssigkeitsbehälter 1 umfasst dabei einen in Einbaulage am Boden des Flüssigkeitsbehälters 1 angeordneten Zwischenspeicher 2, eine innerhalb des Zwischenspeichers 2 angeordnete Flüssigkeitsfördereinheit 3, und zwei in Einbaulage am Boden außerhalb des Zwischenspeichers 2 angeordnete erste Filterelemente 4, die jeweils über eine Flüssigkeitsleitung 5 mit der Flüssigkeitsfördereinheit 3 verbunden sind. Die ersten Filterelemente 4 sind so ausgebildet, dass das Filtergewebe der ersten Filterelemente 4 durchlässig für die im Flüssigkeitsbehälter 1 befindliche Flüssigkeit und undurchlässig für Luft sind.

Weiterhin ist zwischen dem Inneren des Zwischenspeichers 2 und der Flüssigkeitsfördereinheit 3 ein zweites Filterelement 6 angeordnet, welches so ausgebildet ist, dass das Filtergewebe des zweiten Filterelements 6 durchlässig für die im Flüssigkeitsbehälter befindliche Flüssigkeit und undurchlässig für Luft ist. Der Durchbrechdruck des zweiten Filterelements 6, bei welchem durch das Filterelement Luft gefördert wird, ist größer als der Durchbrechdruck der ersten Filterelemente 4. Der Flüssigkeitsbehälter 1 umfasst weiterhin ein erstes Ventil 7 zwischen der Flüssigkeitsfördereinheit 3 und den ersten Filterelementen 4, wobei der Öffnungsdruck des ersten Ventils 7 kleiner ist als der Durchbrechdruck des zweiten Filterelements 6.

Der Öffnungsdruck des ersten Ventils 7 kann von dem Durchbrechdruck der ersten Filterelemente 4 beeinflusst werden, da diese in Strömungsrichtung in Reihe geschaltet sind. Dass der Öffnungsdruck des ersten Ventils 7 kleiner ist als der Durchbrechdruck des zweiten Filterelements 6 ist so zu verstehen, dass die Reihenschaltung aus erstem Filterelement 4 und erstem Ventil 7 insgesamt einen Öffnungsdruck aufweist, der kleiner ist als der Durchbrechdruck des zweiten Filterelements.

Beispielsweise weist das zweite Filterelement 6 einen Durchbrechdruck von 100 mbar auf, die ersten Filterelemente 4 einen Durchbrechdruck von 50 mbar und das erste Ventil einen Öffnungsdruck von 25 mbar.

Ein derart ausgestalteter Flüssigkeitsbehälter 1 gewährleistet, dass zuerst die Flüssigkeit aus dem Zwischenspeicher 2 mittels der Flüssigkeitsfördereinheit 3 gefördert wird. Nachfolgend, wenn der Zwischenspeicher 2 keine Flüssigkeit mehr enthält, öffnet vor einem Durchbruch des zweiten Filterelements 6 das erste Ventil 7 und die Flüssigkeit wird über die ersten Filterelemente 4 und die Flüssigkeitsleitungen 5 von verschiedenen Punkten am Boden des Flüssigkeitsbehälters 1 abgesaugt, bis dieser vollständig entleert ist.

Zur Erreichung des Durchbrechdrucks des zweiten Filterelements 6 kann dieses wenigstens zwei in Förderrichtung hintereinander angeordnete Filtergewebe umfassen. Vorzugsweise entsprechen diese wenigstens zwei Filtergewebe des zweiten Filterelements 6 dem Filtergewebe des ersten Filterelements 4.

Der Zwischenspeicher 2 umfasst ein Heizelement 8, um die im Zwischenspeicher 2 befindliche Flüssigkeit zu erhitzen bzw. nach dem Einfrieren abzuschmelzen.

Weiterhin ist der Zwischenspeicher 2 als Schwalltopf ausgebildet, um eine Bewegung der Flüssigkeit während einer Bewegung des Flüssigkeitsbehälters, beispielsweise beim Einsetzen in ein Kraftfahrzeug, einzuschränken bzw. sicherzustellen, dass das zweite Filterelement möglichst lange von Flüssigkeit umgeben ist.

Weiterhin kann das zweite Filterelement 6 am in Einbaulage Boden des Zwischenspeichers angeordnet werden, um eine möglichst vollständige Restentleerung des Zwischenspeichers zu gewährleisten.

Entsprechend sind die ersten Filterelemente 4 in Einbaulage an den niedrigsten Punkten des Flüssigkeitsbehälters 1 angeordnet.

Der Durchbrechdruck der ersten Filterelemente 4 ist in dem dargestellten Ausführungsbeispiel gleich groß, um keine Selektion zwischen den beiden ersten Filterelementen 4 vorzunehmen.

Der in Figur 1 dargestellte Flüssigkeitsbehälter kann beispielsweise im Blasformverfahren oder im Spritzgussverfahren hergestellt werden und dient zum Transport von wässriger Harnstofflösung in einem Kraftfahrzeug, wobei die wässrige Harnstofflösung einem SCR-Katalysator zugeführt wird.

Der in Figur 2 dargestellte Flüssigkeitsbehälter 1 für eine wässrige Harnstofflösung umfasst einen in Einbaulage am Boden des Flüssigkeitsbehälters 1 angeordneten Zwischenspeicher 2, eine Flüssigkeitsfördereinheit 3, wenigstens zwei in Einbaulage am Boden außerhalb des Zwischenspeichers 2 angeordnete erste Filterelemente 4, die jeweils über eine Flüssigkeitsleitung 5 mit der Flüssigkeitsfördereinheit 3 verbunden sind, wobei die ersten Filterelemente 4 so ausgebildet sind, dass das Filtergewebe der ersten Filterelemente 4 durchlässig für die Flüssigkeitsbehälter 1 befindliche Flüssigkeit und undurchlässig für Luft ist.

Zwischen dem Inneren des Zwischenspeichers 2 und der Flüssigkeitsfördereinheit 3 ist ein zweites Filterelement 6 angeordnet, welches so ausgebildet ist, dass das Filtergewebe des zweiten Filterelements 6 durchlässig für die im Flüssigkeitsbehälter befindliche Flüssigkeit und undurchlässig für Luft ist, wobei der Durchbrechdruck des zweiten Filterelements 6, bei welchem durch das Filterelement Luft gefördert wird, größer ist als der Durchbrechdruck der ersten Filterelemente 4. Zwischen der Flüssigkeitsfördereinheit 3 und den ersten Filterelementen 4 ist ein erstes Ventil 7 angeordnet, wobei der Öffnungsdruck des ersten Ventils 7 kleiner ist als der Durchbrechdruck des zweiten Filterelements 6.

Die ersten Filterelemente 4 sind jeweils über eine Flüssigkeitsleitung 5 mit einem Sammelpunkt 9 verbunden und der Sammelpunkt 9 ist über eine Flüssigkeitssammelleitung 10 mit der Flüssigkeitsfördereinheit 3 verbunden. Der Sammelpunkt 10 ist in Einbaulage am höchsten Punkt in der Flüssigkeitsverbindung zwischen den ersten Filterelementen 4 und der Flüssigkeitsfördereinheit 3 angeordnet. Eine derartige Anordnung hat den Vorteil, dass, sobald Flüssigkeit durch ein erstes Filterelement 4 und der zugehörigen Flüssigkeitsleitung 5 gefördert wird, der Flüssigkeitspegel in den anderen Flüssigkeitsleitungen 5 nicht abfällt, so dass nachfolgend durch diese Flüssigkeitsleitungen 5 schneller Flüssigkeit gefördert werden kann.

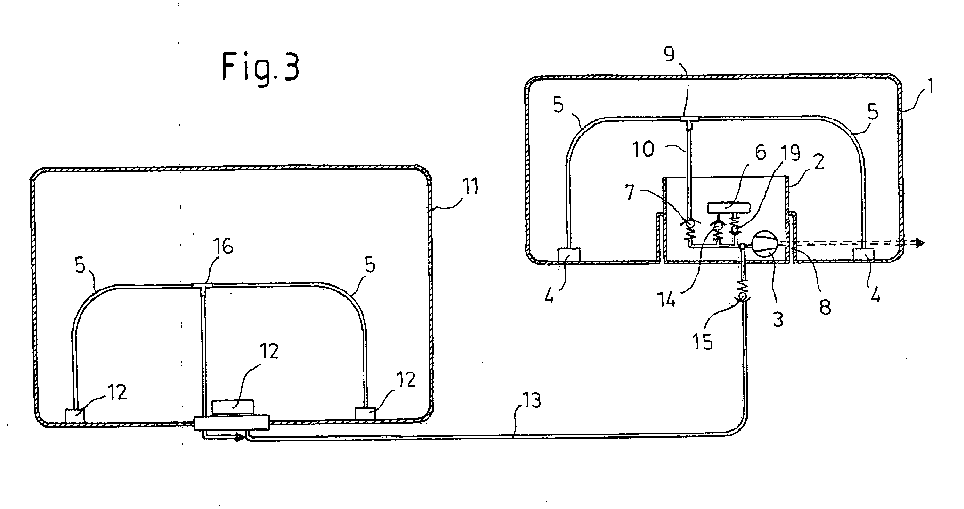

In Figur 3 ist ein Flüssigkeitsbehälter 1 gemäß Figur 2 dargestellt, welcher weiterhin einen außerhalb des Flüssigkeitsbehälters 1 angeordneten zweiten Flüssigkeitsbehälter 11 mit wenigstens einem in Einbaulage am Boden angeordneten dritten Filterelement 12, wobei der zweite Flüssigkeitsbehälter 11 über das wenigstens eine dritte Filterelement 12-und eine Flüssigkeitsverbindungsleitung 13 mit der Flüssigkeitsfördereinheit 3 verbunden ist.

Der Flüssigkeitsbehälter 1 wird dabei auch als Aktivbehälter bezeichnet, da er aktive Komponenten wie beispielweise die Flüssigkeitsfördereinheit 3 umfasst und der zweite Flüssigkeitsbehälter 11 wird als Passivbehälter bezeichnet, da dieser keine aktiven Komponenten enthält.

Eine zweiteilige Ausgestaltung der Flüssigkeitsbehälter 1, 11 hat mehrere Vorteile. Zum einen können die Behältnisse kleiner ausgebildet sein und somit besser an den am Montageort vorhandenen Raum angepasst werden. Zum anderen ist es ausreichend, wenn einer der beiden Behälter eine Heizvorrichtung 8 umfasst, um auch während niedriger Temperaturen ausreichend Flüssigkeit bereitzustellen. Die Flüssigkeit in einem kleineren Flüssigkeitsbehälter 1, 11 kann dabei schneller abgetaut werden als in einem großen Behältnis.

Der Flüssigkeitsbehälter 1 in Verbindung mit dem zweiten Flüssigkeitsbehälter 11 aus Figur 3 umfasst weiterhin ein zweites Ventil 14 zwischen dem zweiten Filterelement 6 und der Flüssigkeitsfördereinheit 3 und ein drittes Ventil 15 zwischen dem dritten Filterelement 12 und der Flüssigkeitsfördereinheit 3, wobei der Öffnungsdruck des zweiten Ventils 14 kleiner als der Öffnungsdruck des ersten Ventils 7 und der Öffnungsdruck des dritten Ventils 15 kleiner als der Öffnungsdruck des zweiten Ventils 14 ist. Durch eine derartige Ausgestaltung wird sichergestellt, dass vorrangig die Flüssigkeit aus dem zweiten Flüssigkeitsbehälter 11 verbraucht wird, bis dieser leer oder eingefroren ist. Nachfolgend wird die Flüssigkeit aus dem Zwischenspeicher 2 verbraucht, bis dieser ebenfalls leer ist und zuletzt wird die Restflüssigkeit aus dem Flüssigkeitsbehälter 1 über die ersten Filterelemente 4 und die Flüssigkeitsverbindung 5 verbraucht.

Die in Figur 3 dargestellte Ausführungsform hat gegenüber dem bekannten Stand der Technik den Vorteil, dass zwischen Aktivbehälter und Passivbehälter keine zusätzliche Flüssigkeitsfördereinheit benötigt wird.

In einer bevorzugten Variante umfasst der Flüssigkeitsbehälter 11 ein viertes Ventil 19 zwischen der Flüssigkeitsfördereinheit 3 und dem Innenraum des Zwischenspeichers 2, um einen Rückfluss von Flüssigkeit von der Flüssigkeitsfördereinheit 3 in den Zwischenspeicher 2 zu ermöglichen, beispielsweise während eines Rückspülens der Flüssigkeitsleitung zwischen Flüssigkeitsfördereinheit 3 und dem Verbraucher. Das vierte Ventil 19 ist als Einwegeventil in Form eines Rückschlagventils ausgebildet. Dies hat den Vorteil, dass die Flüssigkeit in den mittels des Heizelements 8 beheizten Zwischenspeichers 2 rückgespült wird, wodurch ein erneutes Einfrieren der Flüssigkeit verhindert bzw. verlangsamt wird. Das vierte Ventil 19 kann einstückig mit dem zweiten Ventil 14 ausgebildet sein. Die Leitung zwischen der Flüssigkeitsfördereinheit 3 und dem Verbraucher wird nach dem Abschalten des Verbrauchers rückgespült, um diese von der Flüssigkeit zu entleeren, um ein Einfrieren der Flüssigkeit innerhalb der Leitung zu dem Verbraucher zu vermeiden.

Wie der in Figur 3 dargestellte Flüssigkeitsbehälter 1 kann der zweite Flüssigkeitsbehälter 11 ebenfalls mehrere dritte Filterelemente 12 umfassen, welche über Flüssigkeitsleitungen 5 mit einem zweiten Sammelpunkt 16 verbunden sind und wobei der zweite Sammelpunkt 16 über die Flüssigkeitsverbindungsleitung 13 mit der Flüssigkeitsfördereinheit 3 verbunden ist, wie in Figur 3 durch die gestrichelten Linien angedeutet.

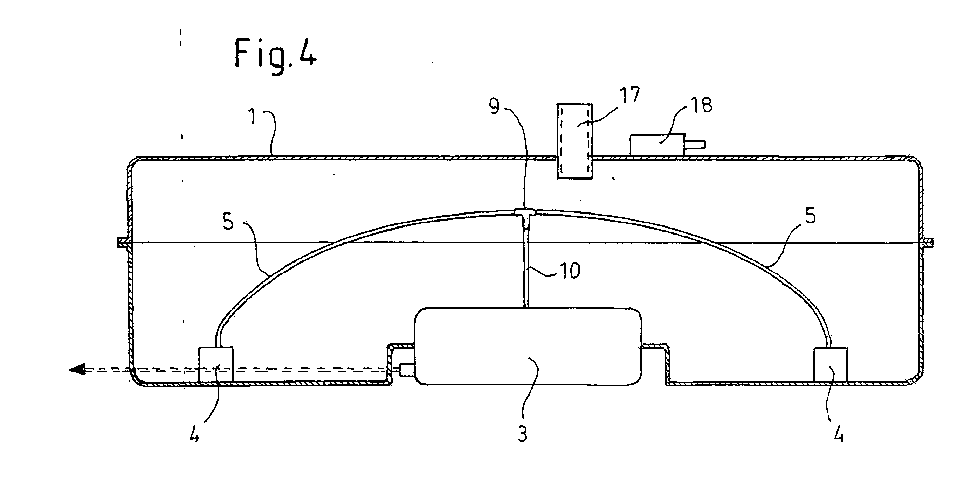

Figur 4 zeigt einen nicht erfindungsgemässen Flüssigkeitsbehälter 1, insbesondere für eine wässrige Harnstofflösung, umfassend eine Flüssigkeitsfördereinheit 3, vier in Einbaulage am Boden des Flüssigkeitsbehälters 1 angeordnete Filterelemente 4, wobei die ersten Filterelemente 4 jeweils über eine Flüssigkeitsleitung 5 mit einem Sammelpunkt 9 verbunden sind und der Sammelpunkt 9 über eine Flüssigkeitssammelleitung 10 mit der Flüssigkeitsfördereinheit 3 verbunden ist.

Der Sammelpunkt 9 ist der in Einbaulage höchste Punkt in der Flüssigkeitsverbindung zwischen den ersten Filterelementen 4 und der Flüssigkeitsfördereinheit 3. Eine derartige Ausgestaltung hat den Vorteil, dass, sobald die Flüssigkeitsfördereinheit 3 Flüssigkeit über ein erstes Filterelement 4 die zugehörige Flüssigkeitsleitung 5 und die Flüssigkeitssammelleitung 10 fördert, der Flüssigkeitspegel in den anderen Flüssigkeitsleitungen 5 zu den anderen ersten Filterelementen 4 nicht durch einen Druckabfall sinkt, sondern gleichbleibend hoch bleibt. In dem Fall, dass über das erste Filterelement 4, welches zuerst die Flüssigkeit lieferte, keine Flüssigkeit mehr gefördert werden kann, so sind die anderen Flüssigkeitsleitungen 5 zu den anderen ersten Filterelementen 4 zumindest teilweise, vorzugsweise komplett, mit Flüssigkeit gefüllt und es kann ohne die Förderung von größeren Luftmengen Flüssigkeit an den Verbraucher geliefert werden.

Wie in Figur 3 dargestellt, kann der Flüssigkeitsbehälter 1 aus Figur 4 weiterhin einen außerhalb des Flüssigkeitsbehälters 1 angeordneten zweiten Flüssigkeitsbehälter 11 mit wenigstens einem in Einbaulage am Boden angeordneten dritten Filterelement 12 umfassen, wobei der zweite Flüssigkeitsbehälter 11 über das wenigstens eine dritte Filterelement 12 und eine Flüssigkeitsverbindungsleitung 13 mit der Flüssigkeitsfördereinheit 3 verbunden ist. Um eine Selektion zwischen dem Flüssigkeitsbehälter 1 und dem zweiten Flüssigkeitsbehälter 11 vorzunehmen, ist beispielsweise ein erstes Ventil 7 zwischen den ersten Filterelementen 4 und der Flüssigkeitsfördereinheit 3 und ein drittes Ventil 15 zwischen den dritten Filterelementen 12 und der Flüssigkeitsfördereinheit 3 vorgesehen, wobei der Öffnungsdruck des dritten Ventils 15 kleiner ist als der Öffnungsdruck des ersten Ventils 7,

Zwischen der Flüssigkeitsfördereinheit 3 und dem Innenraum des Zwischenspeichers 2 ist ein viertes Ventil 19 angeordnet, so dass die aus der Leitung zwischen Flüssigkeitsfördereinheit 3 und Verbraucher rückgespülte Flüssigkeit in den beheizten Zwischenspeicher 2 gelangt. Das vierte Ventil 19 kann auch so angeordnet sein, dass ein Rückspülen der Flüssigkeit über das zweite Filterelement 6 erfolgt.

Um eine vollkommene Restentleerung des Flüssigkeitsbehälters 1, des Zwischenspeichers 2 und/oder des zweiten Flüssigkeitsbehälters 11 zu gewährleisten, sind die ersten Filterelemente 4, die zweiten Filterelemente 6 bzw. die dritten Filterelemente 12 am Boden des jeweiligen Behälters angeordnet.

Je nach Einsatzgebiet kann ein nicht erfindungsgemäßer Flüssigkeitsbehälter 1 einen Befüllstutzen 17 und/oder ein Ventilationselement 18 umfassen, wie in Figur 4 dargestellt.

Die in den Ausführungsbeispielen gemäß den Figuren 1 bis 4 verwendeten ersten Ventile 7, zweiten Ventile 14 und dritten Ventile 15 sind allesamt als Einwegeventil ausgebildet, beispielsweise in Form eines Rückschlagventils.

### Bezugszeichenliste:

- 1: Flüssigkeitsbehälter
- 2: Zwischenspeicher
- 3: Flüssigkeitsfördereinheit
- 4: erstes Filterelement
- 5: Flüssigkeitsleitung
- 6: zweites Filterelement
- 7: erstes Ventil
- 8: Heizelement
- 9: Sammelpunkt
- 10: Flüssigkeitssammelleitung
- 11: zweiter Flüssigkeitsbehälter
- 12: drittes Filterelement
- 13: Flüssigkeitsverbindungsleitung
- 14: zweites Ventil
- 15: drittes Ventil
- 16: zweiter Sammelpunkt
- 17: Befüllstutzen
- 18: Ventilationselement
- 19: viertes Ventil

## Patentansprüche

1. Flüssigkeitsbehälter (1), insbesondere für eine wässrige Harnstofflösung, umfassend:
einen in Einbaulage am Boden des Flüssigkeitsbehälters (1) angeordneten Zwischenspeicher (2),
eine Flüssigkeitsfördereinheit (3),
wenigstens ein, vorzugsweise mehrere, in Einbaulage am Boden außerhalb des Zwischenspeichers (2) angeordnete erste Filterelemente (4), die jeweils über eine Flüssigkeitsleitung (5) mit der Flüssigkeitsfördereinheit (3) verbunden sind,
wobei die ersten Filterelemente (4) so ausgebildet sind, dass das Filtergewebe der ersten Filterelemente (4) durchlässig für die im Flüssigkeitsbehälter (1) befindliche Flüssigkeit und undurchlässig für Luft ist,
wobei zwischen dem Inneren des Zwischenspeichers (2) und der Flüssigkeitsfördereinheit (3) ein zweites Filterelement (6) angeordnet ist,
welches so ausgebildet ist, dass das Filtergewebe des zweiten Filterelements (6) durchlässig für die im Flüssigkeitsbehälter (1) befindliche Flüssigkeit und undurchlässig für Luft ist, weiterhin umfassend ein erstes Ventil (7) zwischen der Flüssigkeitsfördereinheit (3) und den ersten Filterelementen (4),
**dadurch gekennzeichnet, dass** der Durchbrechdruck des zweiten Filterelements (6), bei welchem - durch das Filterelement Luft gefördert wird, größer ist als der Durchbrechdruck der ersten Filterelemente (4),
wobei der Öffnungsdruck des ersten Ventils (7) kleiner ist als der Durchbrechdruck des zweiten Filterelements (6).

2. Flüssigkeitsbehälter (1) nach Anspruch 1, wobei das zweite Filterelement (6) wenigstens zwei in Förderrichtung hintereinander angeordnete Filtergewebe umfasst, wodurch sich der Durchbrechdruck des zweiten Filterelements (6) erhöht.

3. Flüssigkeitsbehälter (1) nach Anspruch 2, wobei die wenigstens zwei Filtergewebe des zweiten Filterelements (6) dem Filtergewebe des ersten Filterelements (4) hinsichtlich des Durchbrechdrucks und/oder des verwendeten Materials entsprechen.

4. Flüssigkeitsbehälter (1) nach einem der Ansprüche 1 bis 3, wobei die ersten Filterelemente (4) jeweils über eine Flüssigkeitsleitung (5) mit einem Sammelpunkt (9) verbunden sind und der Sammelpunkt (9) über eine Flüssigkeitssammelleitung (10) mit der Flüssigkeitsfördereinheit (3) verbunden ist.

5. Flüssigkeitsbehälter (1) nach Anspruch 4, wobei der Sammelpunkt (10) der in Einbaulage höchste Punkt in der Flüssigkeitsverbindung zwischen den ersten Filterelementen (4) und der Flüssigkeitsfördereinheit (3) ist.

6. Flüssigkeitsbehälter (1) nach Anspruch 4 oder 5, wobei das erste Ventil (7) in der Flüssigkeitssammelleitung (10) angeordnet ist.

7. Flüssigkeitsbehälter (1) nach einem der Ansprüche 1 bis 6, wobei der Zwischenspeicher (2) ein Heizelement (8) umfasst, um die im Zwischenspeicher (2) befindliche Flüssigkeit abzuschmelzen bzw. zu erhitzen, und/oder als Schwalltopf ausgebildet ist.

8. Flüssigkeitsbehälter (1) nach einem der Ansprüche 1 bis 7, weiterhin umfassend ein außerhalb des Flüssigkeitsbehälters (1) angeordneten zweiten Flüssigkeitsbehälter (11) mit wenigstens einem in Einbaulage am Boden angeordneten dritten Filterelement (12), wobei der zweite Flüssigkeitsbehälter (11) über das wenigstens eine dritte Filterelement (12) und eine Flüssigkeitsverbindungsleitung (13) mit der Flüssigkeitsfördereinheit (3) verbunden ist.

9. Flüssigkeitsbehälter (1) nach Anspruch 8, weiterhin umfassend ein zweites Ventil (14) zwischen dem zweiten Filterelement (6) und der Flüssigkeitsfördereinheit (3) und ein drittes Ventil (15) zwischen dem dritten Filterelement (12) und der Flüssigkeitsfördereinheit (3),
wobei der Öffnungsdruck des zweiten Ventils (14) kleiner als der Öffnungsdruck des ersten Ventils (7) und der Öffnungsdruck des dritten Ventils (15) kleiner als der Öffnungsdruck des zweiten Ventils (14) ist.

10. Flüssigkeitsbehälter (1) nach Anspruch 8 oder 9, weiterhin umfassend ein viertes Ventil (19) zwischen der Flüssigkeitsfördereinheit (3) und dem Innenraum des Flüssigkeitsbehälters (1), vorzugsweise dem Innenraum des Zwischenspeichers (2).

11. Flüssigkeitsbehälter (1) nach einem der Ansprüche 8 bis 10, weiterhin umfassend einen zweiten Sammelpunkt (16) in dem zweiten Flüssigkeitsbehälter (11), vorzugsweise ist der zweite Sammelpunkt (16) der in Einbaulage höchste Punkt der Flüssigkeitsleitung (5) innerhalb des zweiten Flüssigkeitsbehälters (11).

12. Flüssigkeitsbehälter (1) nach einem der Ansprüche 8 bis 11, wobei der zweite Flüssigkeitsbehälter (11) in Einbaulage oberhalb oder unterhalb des ersten Flüssigkeitsbehälter (1) angeordnet ist, wobei die Flüssigkeitsverbindungsleitung (13) vorzugsweise keine Flüssigkeitsfördereinheit (3) aufweist.

13. Flüssigkeitsbehälter (1) nach einem der Ansprüche 1 bis 12, wobei das zweite Filterelement (6) in Einbaulage am Boden des Zwischenspeichers (2) angeordnet ist.

## Claims

1. Liquid reservoir (1), in particular for an aqueous urea solution, comprising:
an intermediate storage basin (2) arranged, in the installation position, on the floor of the liquid reservoir (1),
a liquid delivery unit (3),
at least one first filter element (4), preferably a plurality of first filter elements (4), arranged, in the installation position, on the floor outside the intermediate storage basin (2), each connected by way of a liquid line (5) to the liquid delivery unit (3),
the first filter elements (4) being in such a form that the filter fabric of the first filter elements (4) is permeable to the liquid located in the liquid reservoir (1) and impermeable to air,
there being arranged between the inside of the intermediate storage basin (2) and the liquid delivery unit (3) a second filter element (6) which is in such a form that the filter fabric of the second filter element (6) is permeable to the liquid located in the liquid reservoir (1) and impermeable to air, further comprising a first valve (7) between the liquid delivery unit (3) and the first filter elements (4),
**characterised in that** the breakthrough pressure of the second filter element (6), at which air passes through the filter element, is greater than the breakthrough pressure of the first filter elements (4),
the opening pressure of the first valve (7) being smaller than the breakthrough pressure of the second filter element (6).

2. Liquid reservoir (1) according to claim 1, wherein the second filter element (6) comprises at least two filter fabrics arranged one behind the other in the delivery direction, as a result of which the breakthrough pressure of the second filter element (6) is increased.

3. Liquid reservoir (1) according to claim 2, wherein the at least two filter fabrics of the second filter element (6) correspond to the filter fabric of the first filter element (4) in terms of the breakthrough pressure and/or the material used.

4. Liquid reservoir (1) according to any one of claims 1 to 3, wherein the first filter elements (4) are each connected by way of a liquid line (5) to a collection point (9) and the collection point (9) is connected by way of a liquid collection line (10) to the liquid delivery unit (3).

5. Liquid reservoir (1) according to claim 4, wherein the collection point (10) is the highest point, in the installation position, in the liquid connection between the first filter elements (4) and the liquid delivery unit (3).

6. Liquid reservoir (1) according to claim 4 or 5, wherein the first valve (7) is arranged in the liquid collection line (10).

7. Liquid reservoir (1) according to any one of claims 1 to 6, wherein the intermediate storage basin (2) comprises a heating element (8) for melting or heating the liquid located in the intermediate storage basin (2) and/or is in the form of a swirl pot.

8. Liquid reservoir (1) according to any one of claims 1 to 7, further comprising a second liquid reservoir (11) which is arranged outside the liquid reservoir (1) and has at least one third filter element (12) arranged, in the installation position, on the floor, the second liquid reservoir (11) being connected by way of the at least one third filter element (12) and a liquid connecting line (13) to the liquid delivery unit (3).

9. Liquid reservoir (1) according to claim 8, further comprising a second valve (14) between the second filter element (6) and the liquid delivery unit (3) and a third valve (15) between the third filter element (12) and the liquid delivery unit (3), the opening pressure of the second valve (14) being smaller than the opening pressure of the first valve (7) and the opening pressure of the third valve (15) being smaller than the opening pressure of the second valve (14).

10. Liquid reservoir (1) according to claim 8 or 9, further comprising a fourth valve (19) between the liquid delivery unit (3) and the interior of the liquid reservoir (1), preferably the interior of the intermediate storage basin (2).

11. Liquid reservoir (1) according to any one of claims 8 to 10, further comprising a second collection point (16) in the second liquid reservoir (11), preferably the second collection point (16) is the highest point, in the installation position, of the liquid line (5) inside the second liquid reservoir (11).

12. Liquid reservoir (1) according to any one of claims 8 to 11, wherein the second liquid reservoir (11) is arranged, in the installation position, above or beneath the first liquid reservoir (1), the liquid connecting line (13) preferably not having a liquid delivery unit (3).

13. Liquid reservoir (1) according to any one of claims 1 to 12, wherein the second filter element (6) is arranged, in the installation position, on the floor of the intermediate storage basin (2).

## Revendications

1. Réservoir de liquide (1), en particulier pour une solution d'urée aqueuse, comprenant :
- un accumulateur intermédiaire (2) agencé sur le fond du réservoir de liquide (1) dans la position de montage,
- une unité de transport de liquide (3),
- au moins un et de préférence plusieurs premiers éléments filtrants (4) agencés sur le fond à l'extérieur de l'accumulateur intermédiaire (2) dans la position de montage, qui sont chacun reliés à l'unité de transport de liquide (3) au moyen d'une conduite de liquide (5),
dans lequel les premiers éléments filtrants (4) sont réalisés de telle sorte que le tissu filtrant des premiers éléments filtrants (4) est perméable pour le liquide se trouvant dans le réservoir de liquide (1) et étanche pour l'air,
dans lequel un deuxième élément filtrant (6) est agencé entre l'intérieur de l'accumulateur intermédiaire (2) et l'unité de transport de liquide (3), lequel est réalisé de telle sorte que le tissu filtrant du deuxième élément filtrant (6) est perméable pour le liquide se trouvant dans le réservoir de liquide (1) et étanche pour l'air,
comprenant en outre une première vanne (7) entre l'unité de transport de liquide (3) et les premiers éléments filtrants (4),
**caractérisé en ce que** la pression de perforation du deuxième élément filtrant (6), à laquelle l'air circule à travers l'élément filtrant, est supérieure à la pression de perforation des premiers éléments filtrants (4),
étant entendu que la pression d'ouverture de la première vanne (7) est inférieure à la pression de perforation du deuxième élément filtrant (6).

2. Réservoir de liquide (1) selon la revendication 1, dans lequel le deuxième élément filtrant (6) comprend au moins deux tissus filtrants agencés l'un derrière l'autre dans le sens du transport, ce par quoi la pression de perforation du deuxième élément filtrant (6) est augmentée.

3. Réservoir de liquide (1) selon la revendication 2, dans lequel les au moins deux tissus filtrants du deuxième élément filtrant (6) correspondent au tissu filtrant du premier élément filtrant (4) en ce qui concerne la pression de perforation et/ou le matériau utilisé.

4. Réservoir de liquide (1) selon l'une des revendications 1 à 3, dans lequel les premiers éléments filtrants (4) sont chacun reliés à un point de collecte (9) au moyen d'une conduite de liquide (5) et le point de collecte (9) est relié à l'unité de transport de liquide (3) au moyen d'une conduite de collecte de liquide (10).

5. Réservoir de liquide (1) selon la revendication 4, dans lequel le point de collecte (9) est le point le plus élevé dans la position de montage dans le raccordement de liquide entre les premiers éléments filtrants (4) et l'unité de transport de liquide (3).

6. Réservoir de liquide (1) selon la revendication 4 ou 5, dans lequel la première vanne (7) est agencée dans la conduite de collecte de liquide (10).

7. Réservoir de liquide (1) selon l'une des revendications 1 à 6, dans lequel l'accumulateur intermédiaire (2) comprend un élément chauffant (8) afin de séparer par fusion ou de chauffer le liquide se trouvant dans l'accumulateur intermédiaire (2) et/ou il est réalisé en tant que pot de tourbillonnement.

8. Réservoir de liquide (1) selon l'une des revendications 1 à 7, comprenant en outre un deuxième réservoir de liquide (11) agencé à l'extérieur du réservoir de liquide (1) ayant au moins un troisième élément filtrant (12) agencé sur le fond dans la position de montage, étant entendu que le deuxième réservoir de liquide (11) est relié à l'unité de transport de liquide (3) au moyen de l'au moins un troisième élément filtrant (12) et d'une conduite de raccordement de liquide (13).

9. Réservoir de liquide (1) selon la revendication 8, comprenant en outre une deuxième vanne (14) entre le deuxième élément filtrant (6) et l'unité de transport de liquide (3) et une troisième vanne (15) entre le troisième élément filtrant (12) et l'unité de transport de liquide (3),
étant entendu que la pression d'ouverture de la deuxième vanne (14) est inférieure à la pression d'ouverture de la première vanne (7) et que la pression d'ouverture de la troisième vanne (15) est inférieure à la pression d'ouverture de la deuxième vanne (14).

10. Réservoir de liquide (1) selon la revendication 8 ou 9, comprenant en outre une quatrième vanne (19) entre l'unité de transport de liquide (3) et l'intérieur du réservoir de liquide (1), de préférence l'intérieur de l'accumulateur intermédiaire (2).

11. Réservoir de liquide (1) selon l'une des revendications 8 à 10, comprenant en outre un deuxième point de collecte (16) dans le deuxième réservoir de liquide (11), étant entendu que le deuxième point de collecte (16) est de préférence le point le plus élevé dans la position de montage de la conduite de liquide (5) à l'intérieur du deuxième réservoir de liquide (11).

12. Réservoir de liquide (1) selon l'une des revendications 8 à 11, dans lequel le deuxième réservoir de liquide (11) est agencé dans la position de montage au-dessus ou en dessous du premier réservoir de liquide (1), étant entendu que la conduite de raccordement de liquide (13) ne présente de préférence pas d'unité de transport de liquide (3).

13. Réservoir de liquide (1) selon l'une des revendications 1 à 12, dans lequel le deuxième élément filtrant (6) est agencé dans la position de montage sur le fond de l'accumulateur intermédiaire (2).
